# EUROPÄISCHE PATENTSCHRIFT

(11) **EP 3 712 526 B1**
(45) Veröffentlichungstag und Bekanntmachung des Hinweises auf die Patenterteilung: **11.08.2021**
(21) Anmeldenummer: 19211848.7
(22) Anmeldetag: 27.11.2019
(51) Int. Cl.: F24F 7/007, F24F 11/77, F24F 11/49

(54) **VERFAHREN ZUR POSITIONSBESTIMMUNG VON VENTILATOREN**
METHOD FOR THE IDENTIFICATION OF THE POSITION OF VENTILATORS
MÉTHODE POUR L'IDENTIFICATION DES POSITIONS DE VENTILATEURS

(30) Priorität: 19.03.2019 DE 102019106946
(43) Veröffentlichungstag der Anmeldung: 23.09.2020
(73) Patentinhaber: ebm-papst Mulfingen GmbH & Co. KG, 74673 Mulfingen (DE)
(72) Erfinder: WYSTUP, Ralph, 74653 Künzelsau (DE); HUMM, Markus, 74679 Weißbach (DE); RAU, Alexander, 74211 Leingarten (DE)
(74) Vertreter: Staeger & Sperling Partnerschaftsgesellschaft mbB

(56) Entgegenhaltungen:
- CN-A- 108 507 132
- JP-A1-WO2017 195 286
- JP-B2- 3 439 908
- US-A1- 2017 307 246
- US-A1- 2018 135 878

## Beschreibung

Die Erfindung betrifft ein Positionsbestimmungssystem und ein Verfahren zur Positionsbestimmung von Ventilatoren.

Es ist erforderlich, die Position von Ventilatoren die im Reinraum innerhalb eines Netzwerks eingebaut sind, zu bestimmen, um diese zum Beispiel auf einem Raum-Plan darstellen zu können.

In Gebäuden kommen so gennannte Filter Fan Units oder auch FFU's oder FVE (Filter-Ventilator-Einheit) bezeichnete Module zum Einsatz. Ein solches Modul, bestehend typischerweise aus einem Ventilator und einem Filter, das die Luft von oben ansaugt und durch den Filter in den Raum einbläst. Ziel ist es, damit die Umluft permanent zu filtern. Auf der Austrittsseite wird der Luftstrom wahlweise turbulent und laminar geführt. Bei der laminaren Variante werden durch Luftleitbleche die Luftströme parallelisiert. Dadurch entsteht ein vertikaler Luftstrom von der FFU bis zum Boden des Raumes.

Filter Fan Units finden sich hauptsächlich in Deckensystemen von Rein- und Reinsträumen, wie sie in der Halbleiterproduktion, der Mikrosystemindustrie, der Pharma- oder der Lebensmittelbranche zu finden sind. In der Reinraumdecke wird typischerweise eine größere Anzahl von Filter Fan Units (FFU) aufgeteilt in Reihen und Spalten installiert. Jede FFU ist für einen bestimmten Abschnitt des Reinraumes zuständig. Jede FFU kann dabei einzeln über einen Zentralrechner gesteuert werden. Dieses Prinzip erlaubt es, für jeden von einer FFU versorgten Abschnitt des Reinraumes individuelle Sollwerte für Temperatur und Luftströmung (Drehzahl des Ventilators) vorzugeben. Eine FFU, die sich über einer wärmeerzeugenden Maschine befindet, wird zum Beispiel etwas stärker gekühlte Luft abgeben. Auf diese Weise werden im gesamten Reinraum ein gleichmäßiger Temperaturgradient und eine gleichmäßige Luftströmung erzeugt. Zugleich verringert sich der Energieaufwand. Hierzu werden allerdings die genauen Positionen der Ventilatoren im Netzwerk benötigt, um diese in einem Ventilatoren-Plan in einem Raum-Plan darzustellen, bei der Steuerung ansprechen zu können, im Fehlerfall die Position einfach bestimmen zu können und dadurch den Überwachungs- und Wartungsaufwand zu reduzieren.

Es gibt im Stand der Technik bereits verschiedene Vorgehensweisen, um eine solche Positionsbestimmung und die Darstellung der ermittelten Positionen der Ventilatoren bzw. FFU's in einen Raum-Plan, insbesondere einem räumlichen Netzwerkplan, vorzunehmen oder dahin zu übertragen. Traditionell wird ein räumlicher Netzwerkplan mit Verkabelungsplan erstellt und werden die Ventilatoren bereits im digitalen Raum-Plan eingezeichnet und müssen dann in der angegebenen Reihenfolge montiert und angeschlossen werden, was vergleichsweise aufwändig ist, da bei der Montage immer sicherzustellen ist, dass der Ventilator mit einer vorgegebenen Netzwerkadresse an die korrekte Position montiert wird.

Alternativ ist im Stand der Technik vorgesehen die Position jedes Ventilators mittels GPS-Technik zu ermitteln und die GPS-Position an ein Schreiberegister im Ventilator zu übertragen. Hierzu muss allerdings die Steuerung so ausgebildet werden, dass diese die Netzwerkadressen und zu jeder Netzwerkadresse dessen Position aus dem Register auslesen kann, um die Position in einen Raum-Plan zu übertragen. Ferner ist in einem Reinraum ein GPS-Signal oft nicht verfügbar.

Denkbar ist es auch, eine auslesbare Adressierung in Form eines Adressaufklebers oder Barcodes in alphanumerischer Darstellung am Gerät vorzusehen. Nach dem Einbau eines jeweiligen Ventilators (bzw. FFU) wird der passende Aufkleber mit der angegebenen, vorbestimmten Position auf die Ventilatoren bzw. FFU geklebt und dann gescannt. Dies birgt insbesondere bei einer höheren Anzahl von Ventilatoren das Risiko, dass fehlerhafte Zuordnungen erfolgen und die Korrektur aufwändige Maßnahmen erfordert, um die fehlerhaften Zuordnungen zu detektieren.

US2018/135878 offenbart eine iterative Methode um Ventilatoren zu lokalisieren.

Der Erfindung liegt daher die Aufgabe zugrunde, vorbesagte Nachteile zu überwinden und ein optimiertes und verbessertes Verfahren sowie eine entsprechende Vorrichtung zur Bestimmung der Position von Ventilatoren, insbesondere in einem Raum angeordneten Ventilatoren anzugeben.

Diese Aufgabe wird durch die Merkmalskombination gemäß den Alternativen in Patentansprüchen 1 und 14 gelöst. Erfindungsgemäß wird ein Verfahren zur Positionsbestimmung von einer Anzahl von Ventilatoren V_{n,m} zur Erzeugung eines Luftstroms in einen vorzugsweise geschlossenen Raum vorgeschlagen. Zur Positionsbestimmung besitzen die Ventilatoren V_{n,m} einen Drehzahlsensor und sind vorzugsweise in Reihen und Spalten angeordnet. Die Position wenigstens eines Ventilators V_{i,j} ist dabei als Referenzposition bekannt. Ferner umfasst das Verfahren die folgenden Schritte:
a) Antreiben des wenigstens einen Ventilators V_{i,j}, dessen Position bekannt ist, um dadurch eine Drehung wenigstens der in jeweils einer Reihen- und Spaltenposition unmittelbar daneben angeordneten Ventilatoren V_{n,m} zu initiieren (unmittelbar daneben bedeutet in diesem Kontext, dass kein weiterer Ventilator zwischen dem betroffenen Ventilator und dem Ventilator dessen Position jeweils bekannt ist, räumlich dazwischen angeordnet ist);
b) Erfassen der Drehzahl der auf diese Weise durch den erzeugten Luftstrom angetriebenen Ventilatoren V_{n,m} mit einem Erfassungs- und Steuergerät und Bestimmen der möglichen Nachbarschafts-Positionen dieser Ventilatoren V_{n,m} auf Basis eines iterativen Ausschluss-Algorithmus,
c) wobei die Schritte a) und b) solange für die nach Schritt b) jeweils bestimmten Ventilatoren V_{n,m} wiederholt werden bis alle Positionen der Ventilatoren V_{n,m} bestimmt wurden.

Im Folgenden wird das prinzipielle Konzept der Erfindung beschrieben.

Die Ventilatoren sind beispielsweise in einer Zwischendecke eines Reinraums angeordnet. Mittels eines im Raum absolut positionsbekannten Ventilators wird durch den bewussten Eigenantrieb dieses Ventilators z. B. mittels eines EC-Motors an den unmittelbar benachbarten Ventilatoren, die den geringsten Abstand zu dem positionsbekannten Ventilator aufweisen, ein Fremdantrieb erzeugt. Dieser Fremdantrieb tritt aufgrund eines resultierenden Druckunterschieds insbesondere zwischen dem Reinraum und dem Raum, der durch die Zwischendecke abgegrenzt wird, auf. Die dadurch induzierte Rotation kann mittels des integrierten Erfassungsgeräts der Drehzahl (z. B. Drehzahlsensor) detektiert werden. Der fremdangetriebene Ventilator muss sich somit in direkter Nachbarschaft zu dem bereits bekannten Ventilator befinden. Hierfür sind die Ventilatoren rechteckig bzw. quadratisch angeordnet, sodass benachbarte Ventilatoren in einer Reihe angeordnet sind, wodurch sich die Ventilatoren in Reihen und Spalten einteilen lassen, die vorzugsweise rechtwinklig zueinander angeordnet sind. Für die genaue Positionsbestimmung in einer quadratischen bzw. rechteckigen Anordnung mehrerer Ventilatoren müssen mindestens zwei bewusst angetriebene Ventilatoren mit genauer, unbekannter Position in unmittelbarer Nachbarschaft bzw. mit einem geringen Abstand benachbart zu dem Ventilator angeordnet sein. Hierbei ist es unerheblich ob die Position des zweiten, zur Positionsbestimmung benötigten Ventilators mit unbekannter Position bereits vorher bekannt war, oder erst durch das hier beschriebene Verfahren ermittelt wurde. Sobald ein "Schnittpunkt" entsteht, also zwei positionsbekannte Ventilatoren einen gemeinsamen, in unmittelbarer Nachbarschaft fremdangetriebenen Ventilator antreiben, kann dadurch relativ zu den absolut positionsbekannten Ventilatoren, dessen Position bestimmt werden.

Vorzugsweise werden die Ventilatoren V_{n,m} jeweils vor dem Schritt a) mittels des Steuergeräts in den Leerlauf gesetzt. Damit wird ein Fremdantrieb der Ventilatoren zur Durchführung der automatischen Positionsbestimmung ermöglicht, da ansonsten der Widerstand des Ventilators gegen einen Fremdantrieb zu hoch ist.

In einer vorteilhaften Ausführungsvariante ist vorgesehen, dass das Antreiben des positionsbekannten Ventilators V_{i,j} in Schritt a) mit einem maximalen Ansteuergrad durchgeführt wird und die Position des Ventilators V_{i,j} auf die bekannte Position gesetzt wird. Auf diese Weise lässt sich ein ausreichend hoher Druckunterschied für den Fremdantrieb der benachbarten Ventilatoren realisieren.

Ferner ist eine Ausführung günstig, bei der das Messen der Drehzahl in Schritt b) der durch den erzeugten Luftstrom angetriebenen Ventilatoren V_{n,m} und das Übertragen der Daten an das Steuergerät mittels der Drehzahlsensoren erfolgt. Dadurch, dass eine Drehzahl der Ventilatoren V_{n,m} registriert wird, können diese Ventilatoren als fremdangetrieben Ventilatoren V_{n,m} identifiziert werden.

In einer weiteren vorteilhaften Variante wird das Bestimmen derjenigen Positionen aller unmittelbar zum Ventilator V_{i,j} in einer Reihenposition und/oder Spaltenposition benachbarten, positionsunbekannten Ventilatoren V_{n,m} in Schritt b) ausgehend von der Position des antreibenden Ventilators V_{i,j} durchgeführt. Vorteilhaft daran ist, dass somit ausgehend von der bekannten Position des antreibenden Ventilators V_{i,j} sämtliche unbekannten Positionen der anderen Ventilatoren V_{n,m} entsprechend deren Position zu dem antreibenden Ventilator V_{i,j} bestimmt werden und deshalb auch deren Position durch diese Verfahren bestimmt wird.

Weiter vorteilhaft ist es, wenn der positionsbekannte Ventilator V_{i,j} nach Schritt b) mittels des Steuergeräts in den Leerlauf geschalten wird. Auf diese Weise wird der positionsbekannte Ventilator V_{i,j} für die folgenden Verfahrensschritte zu einem möglichen Fremdantrieb befähigt.

In einer bevorzugten Ausführungsform des Verfahrens wird das Antreiben eines von wenigstens zwei der in Schritt b) erfassten Ventilatoren V_{n,m} mit einem vorbestimmten, vorzugsweise maximalen Ansteuergrad. Durch den Antrieb eines der in Schritt b) erfassten Ventilatoren V_{n,m} werden wiederum dessen benachbart Ventilatoren V_{n,m} fremdangetrieben.

Gemäß einer Ausführungsform der Erfindung wird dazu in Schritt b) die Positionen der unmittelbar zum in Schritt b) angetrieben Ventilator V_{n,m} benachbarten, positionsunbekannten Ventilatoren V_{n+1,m}; V_{n,m+1} mit der Position des antreibenden Ventilators V_{n,m} markiert werden. Dabei deutet n+1 bzw. m+1 darauf hin, dass sich der Ventilator innerhalb einer Reihe bzw. Spalte eine Position weiter beabstandet von dem antreibend Ventilator V_{n,m} ist. Die Markierung oder eine "Merken"-Funktion dient dabei zu kennzeichnen, dass der markierte Ventilator V_{n+1,m}; V_{n,m+1} bereits einmal fremdangetrieben wurde. Darüber hinaus wird durch die Markierung oder die "Merken"-Funktion festgelegt, durch welchen Ventilator V_{n,m} dieser Ventilator V_{n+1,m}; V_{n,m+1} fremdangetrieben wurde. Folglich kann bereits eine relative Position des Ventilators V_{n+1,m}; V_{n,m+1} zu dem angetriebenen Ventilator V_{n,m} bestimmt werden.

Erfindungsgemäß ist dazu vorgesehen, dass in Schritt b) nach der Markierung der benachbarten, positionsunbekannten Ventilatoren V_{n+1,m}; V_{n,m+1} der angetriebene Ventilator V_{n,m} in den Leerlauf geschalten wird und einer der anderen markierten Ventilatoren V_{n+1,m}; V_{n,m+1} mit einem maximalen Ansteuergrad angetrieben wird. Sukzessive werden die Verfahrensschritte für sämtliche Ventilatoren V_{n,m} durchgeführt.

Gemäß einer vorteilhaften Ausführungsform der vorliegenden Erfindung ist vorgesehen, dass in Schritt b) die Drehzahl der durch den Ventilator V_{n+1,m}; V_{n,m+1} angetriebenen benachbarten, positionsunbekannten Ventilatoren V_{n+2,m}; V_{n,m+2} mittels der Drehzahlsensoren bestimmt wird und die Daten an das Steuergerät übertragen werden. Dadurch, dass eine Drehzahl der Ventilatoren V_{n+2,m}; V_{n,m+2} registriert wird, können diese Ventilatoren V_{n+2,m}; V_{n,m+2} wiederum als fremdangetrieben Ventilatoren identifiziert werden.

Ferner ist mit Vorteil vorgesehen, dass in Schritt b) die Positionen der benachbarten, positionsunbekannten Ventilatoren mit der Position V_{n+2,m}; V_{n,m+2} des antreibenden Ventilators V_{n+1,m}; V_{n,m+1} markiert werden. Die Markierung dient dabei erneut zu kennzeichnen, dass der Markierte Ventilator Vₙ₊₂,ₘ; V_{n,m+2} bereits einmal fremdangetrieben wurde. Darüber hinaus wird durch die Markierung festgelegt durch welchen Ventilator V_{n+1,m;} V_{n,m+1} dieser Ventilator V_{n+2,m}; V_{n,m+2} fremdangetrieben wurde. Folglich kann bereits eine relative Position des Ventilators V_{n+2,m}; V_{n,m+2} zu dem angetriebenen Ventilator V_{n+1,m}; V_{n,m+1} bestimmt werden.

Vorzugsweise wird das Verfahren derart durchgeführt, dass, falls ein Ventilator V_{n+1,m}; V_{n,m+1}; V_{n+2,m}; V_{n,m+2} bereits Markiert ist, die Position des Ventilators auf eine eindeutige, bestimmte Position gesetzt wird. Dadurch ergibt sich eine Schnittstelle, bei der beide Markierungen miteinander verrechnet werden. Weiter vorteilhaft ist es, wenn die Bestimmung der Position (n, m) des Ventilators (V_{n+1,m}; V_{n,m+1}) durch diesen Vergleich der Indizes n und m der bereits vorhandenen Markierung und der neu entstandenen Markeirung erfolgt. Der jeweils höhere Index stellt dabei den Index für die bestimmte Position dar.

Der jeweils höhere Wert des jeweiligen Index wird übernommen. Diese Kreuzposition ergibt die relativen Koordinaten welche mit den absoluten Werten (Abstand zwischen den einzelnen Ventilatoren) multipliziert werden kann.

Weiter vorteilhaft ist eine Ausführungsform, bei das Antreiben eines der markierten Ventilatoren V_{n+1,m}; V_{n,m+1} so lange durchgeführt wird, bis sämtlich Ventilatoren V_{n,m} bestimmt sind. Folglich ist dann auch das komplette System der Ventilatoren V_{n,m} betreffend der Anordnung der Ventilatoren V_{n,m} zueinander positionsbestimmt.

Erfindungsgemäß ist ferner ein Verfahren zur Positionsbestimmung von einer Anzahl an Ventilatoren V_{n,m} zur Erzeugung eines Luftstroms in einen vorzugsweise geschlossenen Raum gemäß den vorherigen Ansprüchen vorgesehen, die zu deren Positionsbestimmung einen Drehzahlsensor besitzen, wobei die Ventilatoren V_{n,m} in Reihen und Spalten angeordnet sind, wobei wenigstens die Position eines Ventilators V_{i,j} bekannt ist, wobei ein Steuergerät, das zur Ansteuerung und Ermittlung der Position der Ventilatoren V_{n,m} ausgebildet ist, vorgesehen ist, wobei jeder der Ventilatoren V_{n,m} von einem in Reihe und Spalte benachbarten Ventilator V_{n+1,m}; V_{n,m+1} indirekt antreibbar ist, mit den folgenden Schritten:
a. Setzen der Ventilatoren V_{n,m} in den Leerlauf mittels des Steuergeräts,
b. Antreiben des positionsbekannten Ventilators V_{i,j} mit einem maximalen Ansteuergrad und Setzen der Position des Ventilators auf die bekannte Position,
c. Messen der Drehzahl der durch den erzeugten Luftstrom angetriebenen Ventilatoren V_{n,m} und Übertragen der Daten an das Steuergerät mittels der Drehzahlsensoren,
d. Bestimmten derjenigen Positionen aller unmittelbar zum Ventilator V_{i,j} in einer Reihenposition und/oder Spaltenposition benachbarten, positionsunbekannten Ventilatoren V_{n,m} ausgehend von der Position des antreibenden Ventilators Vⱼ,ⱼ,
e. Schalten des positionsbekannten Ventilators V_{i,j} in den Leerlauf mittels des Steuergeräts,
f. Antreiben eines von wenigstens zwei der erfassten Ventilatoren V_{n,m} mit einem vorbestimmten, vorzugsweise maximalen Ansteuergrad,
g. Markieren der Positionen der unmittelbar zum in Schritt f) angetriebenen Ventilator V_{n,m} benachbarten, positionsunbekannten Ventilatoren V_{n+1,m}; V_{n,m+1} mit der Position des antreibenden Ventilators V_{n,m,}
h. Schalten des angetriebenen Ventilators V_{n,m} in den Leerlauf und Antreiben wenigstens des zweiten markierten Ventilatoren V_{n,m} mit einem maximalen Ansteuergrad,
i. Bestimmen der Drehzahl der durch den zweiten Ventilator (Vₙ,ₘ) angetriebenen benachbarten, positionsunbekannten Ventilatoren V_{n+1,m}; V_{n,m+1} mittels der Drehzahlsensoren und Übertragen der Daten an das Steuergerät,
j. Markieren der Positionen der unmittelbar zum in Schritt i) angetrieben Ventilator V_{n,m} benachbarten, positionsunbekannten Ventilatoren V_{n+1,m}; V_{n,m+1} mit der Position des antreibenden Ventilators V_{n,m}; V_{n,m},
k. falls ein Ventilator V_{n+1,m}; V_{n,m+1} in Schritt g) bzw. j) bereits markiert ist, Bestimmen und Setzen der Position des Ventilators V_{n+1,m}; V_{n,m+1} auf eine eindeutige, bestimmte Position,
l. Antreiben eines der in Schritt g) bzw. j) markierten Ventilatoren und wiederholen der Schritte f) bis k), so lange bis sämtliche Ventilatoren bestimmt sind.

Gemäß einer vorteilhaften Ausführungsform der vorliegenden Erfindung ist vorgesehen, dass die Position des Ventilators V_{i,j} auf den Wert "0,0" gesetzt ist und wenn bei einem Ventilator V_{n,m} die Positionen von zwei unmittelbar benachbarten Ventilatoren V_{n+1,m}; V_{n,m+1} bekannt ist und die Position eines weiteren unmittelbar benachbarten Ventilators V_{n+1,m}; V_{n,m+1} unbekannt ist und wenn eine Markierung der unbekannten Position den Wert "0,0" aufweist, anschließend die Markierung ungleich "0,0" um 1 inkrementiert wird. Auf diese Weise lässt sich die Position aller Ventilatoren V_{n,m}, die innerhalb der quadratischen Reihen- und Spaltenanordnung an den äußeren Randabschnitten angeordnet sind, bestimmen.

In einer bevorzugten Ausführungsvariante des Verfahrens werden in Schritt i), falls in Schritt f) und I) mehr als die unmittelbar benachbarten Ventilatoren (V_{n+1,m}; V_{n,m+1}) angetrieben werden, nur die Ventilatoren (V_{n+1,m}; V_{n,m+1}) mit der höchsten Drehzahl betrachtet. Da aufgrund des Fremdantriebs Ventilatoren V_{n+1,m}; V_{n,m+1}, die weiter von dem angetriebenen Ventilator V_{i,j} beabstandet sind als die Ventilatoren V_{n,m} eine geringere Drehzahl aufweisen, lassen sich auf diese Weise die Ventilatoren V_{n,m} mit dem geringsten Abstand zu dem angetriebenen Ventilator V_{i,j} eindeutig bestimmen.

Erfindungsgemäß ist vorgesehen, dass der Drehzahlsensor zur Ermittlung der Drehzahl eines Ventilators V_{n,m} ein Hall-Sensor ist. Denkbar wäre es auch eine Back-EMF-Messung durchzuführen und anhand der induzierten Spannung einen wie zuvor beschriebenen Rückschluss auf die Position des Ventilators zu treffen.

In einer weiteren vorteilhaften Ausführungsvariante ist vorgesehen, dass für eine exakte Positionsbestimmung in den Schritten f) bis I) mindestens zwei Ventilatoren V_{n,m} indirekt angetrieben werden müssen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

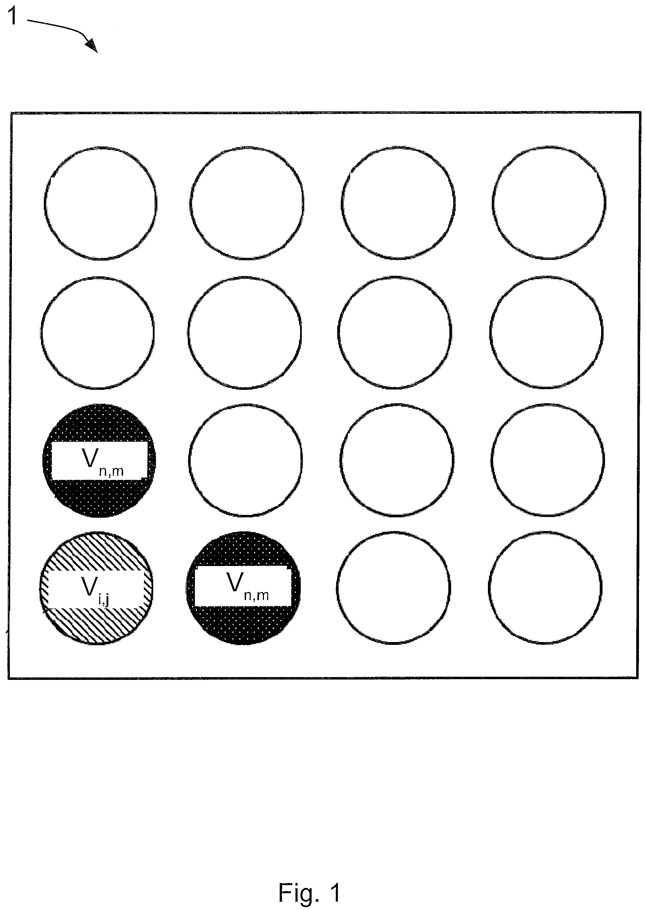

- Fig. 1 bis Fig. 6: eine schematische Darstellung eines beispielhaften Positionsbestimmungssystems mit einem angetrieben, positionsbekannten Ventilator und zwei fremdangetrieben Ventilatoren.

In Figur 1 ist eine schematische Darstellung eines beispielhaften Positionsbestimmungssystems mit einem angetrieben, positionsbekannten Ventilator V_{i,j} und zwei fremdangetrieben Ventilatoren V_{n,m} dargestellt. Zur Durchführung der automatischen Positionsbestimmung ist der Leerlauf der Ventilatoren V_{n,m} durch das Steuergerät aktiviert. Zusätzlich sind die Ventilatoren V_{n,m} in einer rechteckigen bzw. quadratischen Anordnung in Reihen und Spalten angeordnet, in welcher der Abstand zwischen zwei Ventilatoren maximal so groß ist, dass ein Fremdantrieb gerade noch bewirkt wird. Die Positionsbestimmung wird ausgehend von einem Ventilator V_{i,j} gestartet, der sich an einem der vier Ecken der Anlage befindet. Die Position dieses Ventilator V_{i,j} ist bekannt. Ferner wird der Ventilator V_{i,j} mit einem maximalem Aussteuergrad angetrieben, sodass die Ventilatoren V_{n,m} mit dem geringsten Abstand zu dem positionsbekannten Ventilator V_{i,j}, fremd angetrieben werden. Die fremdangetriebene Ventilatoren V_{n,m} drehen sich im entgegengesetzten Drehsinn in Bezug auf den bewusst angetriebenen Ventilator V_{i,j}. Dadurch kann ebenfalls eine Unterscheidung zwischen den Ventilatoren erfolgen.

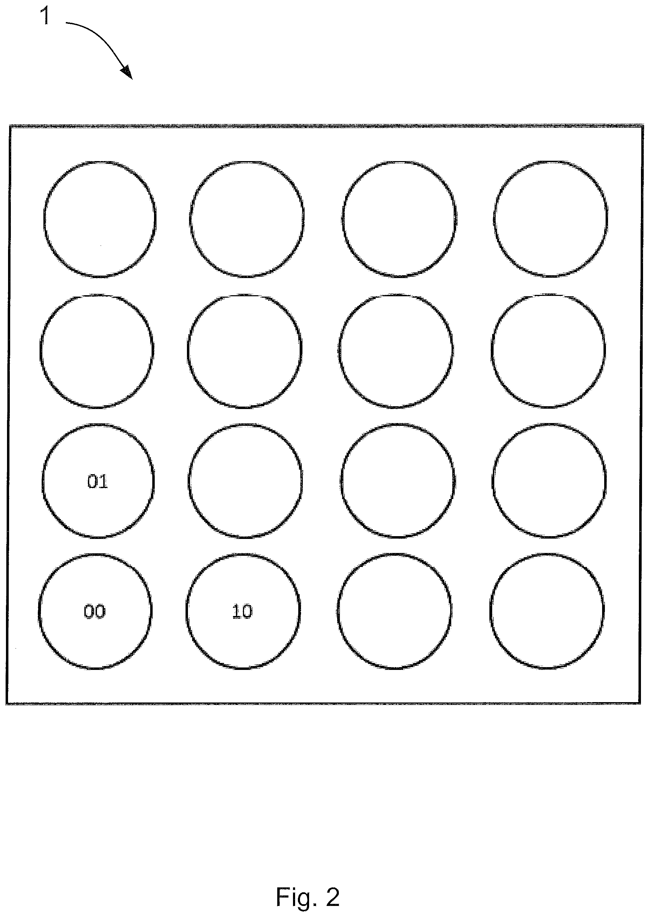

Figur 2 zeigt eine vorläufige bestimmte Position für die fremdangetriebenen Ventilatoren V_{n,m}. Da sich zu diesem Zeitpunkt auch andere Ventilatoren V_{n,m} in der Umgebung befinden, die ebenfalls fremdangetrieben werden, ist noch keine eindeutige Positionsbestimmung möglich. Der positionsbekannte Ventilator V_{i,j} befindet sich in einer Ecke der Anlage. Da es sich im ersten Schritt um ein unterbestimmtes System handelt, sprich ein positionsbekannter Ventilator V_{i,j} und zwei unbekannte Ventilatoren V_{n,m}, muss eine Annahme bezüglich der Ausbreitungsrichtung getroffen werden. Hierbei wird einem Ventilator V_{n,m} der Index "0,1" und dem anderen Ventilator V_{n,m} der Index "10" zugeordnet. Die Zuordnung erfolgt zufällig und beschreibt die Ausbreitung in n bzw. m Richtung, ähnlich eines kartesischen Koordinatensystems. Da ähnlich der Fehlerfortpflanzung diese Annahme über das gesamte Verfahren mitgezogen wird, muss am Ende womöglich eine Korrektur mittels dem Tausch der Indizes erfolgen, also "n,m" zu "n,m".

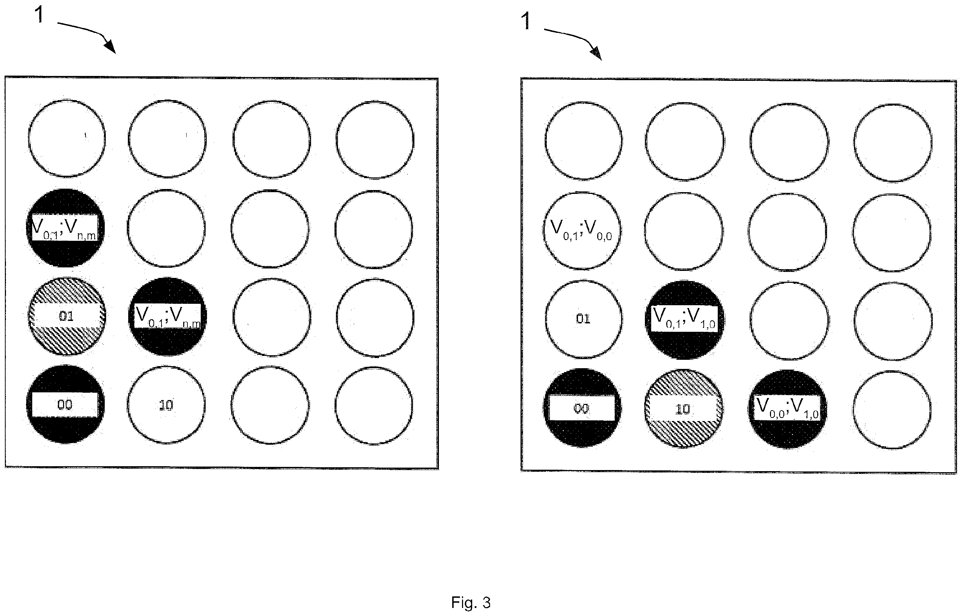

Figur 3 zeigt, dass in den weiteren Verfahrensschritten die neu ermittelten Ventilatoren V_{n,m} abwechselnd ebenfalls in den Eigenbetrieb versetzt werden. Dadurch werden erneut benachbarte Ventilatoren V_{n+1,m}; V_{n,m+1} fremdangetrieben. Jedem fremdangetrieben Ventilator wird dabei erneut eine entsprechende Markierung zugeordnet, die den Ventilator V_{n,m}, definiert, der den Fremdantrieb verursacht hat.

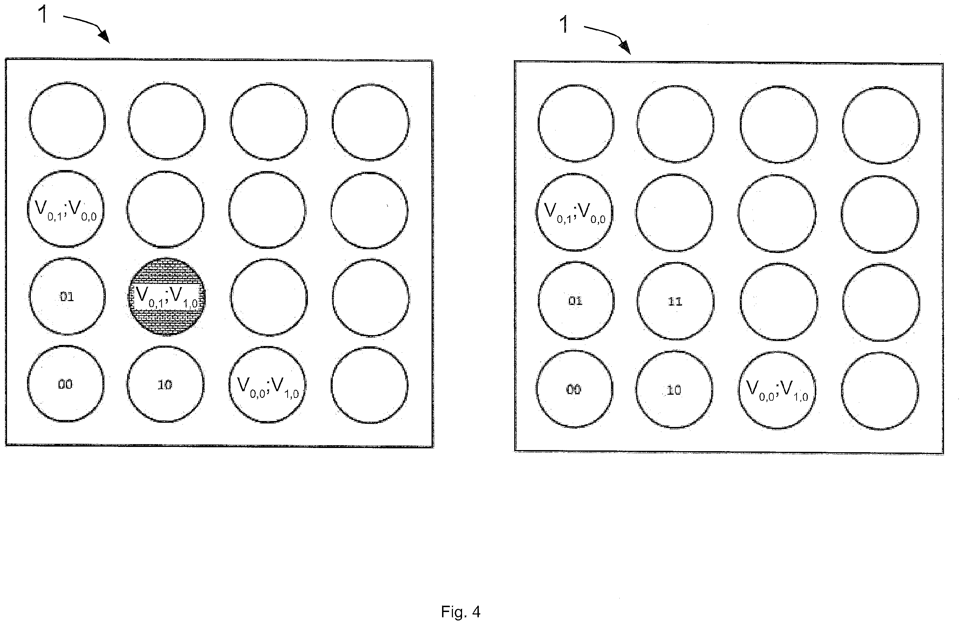

Dadurch ergibt sich die in Figur 4 dargestellte eine "Schnittstelle". Zur Positionsbestimmung werden beide Markierungen übereinander gelegt und jeweils der höhere Wert des jeweiligen Index n,m wird übernommen.

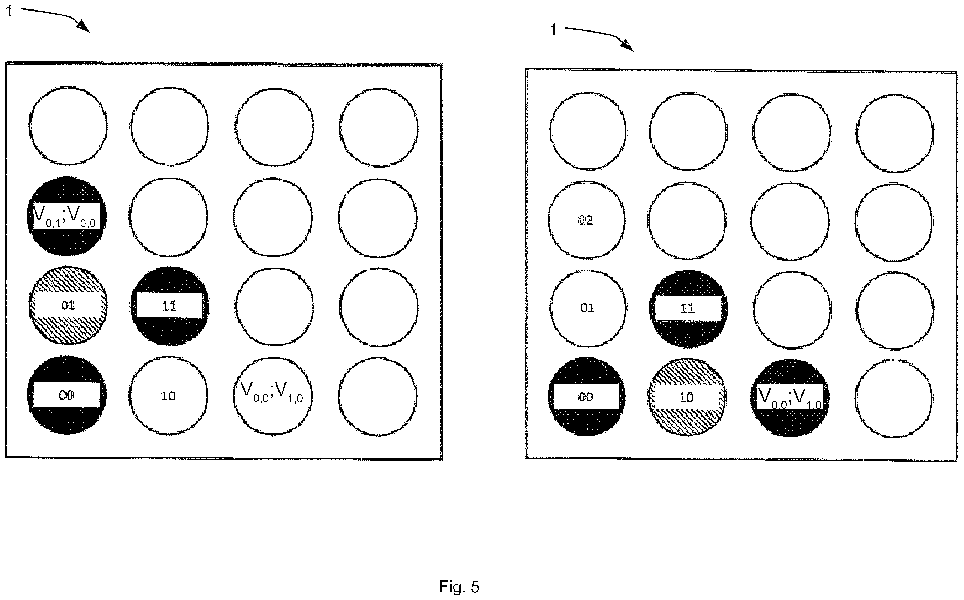

In Figur 5 ist ein erneuter Eigenantrieb der zuvor betriebenen Ventilatoren V_{n,m} dargestellt. Mittels dieser erneuten Durchführung ist nun aufgrund des neu bekannten Ventilators V_{n,m} eine eindeutige Bestimmbarkeit der Randventilatoren gewährleistet. Dabei ist eine Bedingung für einen Randventilator so definiert, dass zwei Positionen bekannt und eine unbekannt ist. Die notwendige Bedingung für einen Randventilator lautet jedoch, dass die unbekannte Position n,m eine "0,0" Markierung besitzt. Sind beide Bedingungen erfüllt wird die Markierung, die ungleich "0,0" ist, einfach inkrementiert. Der neue Index lautet dann in diesem Fall "0,2" bzw. "2,0".

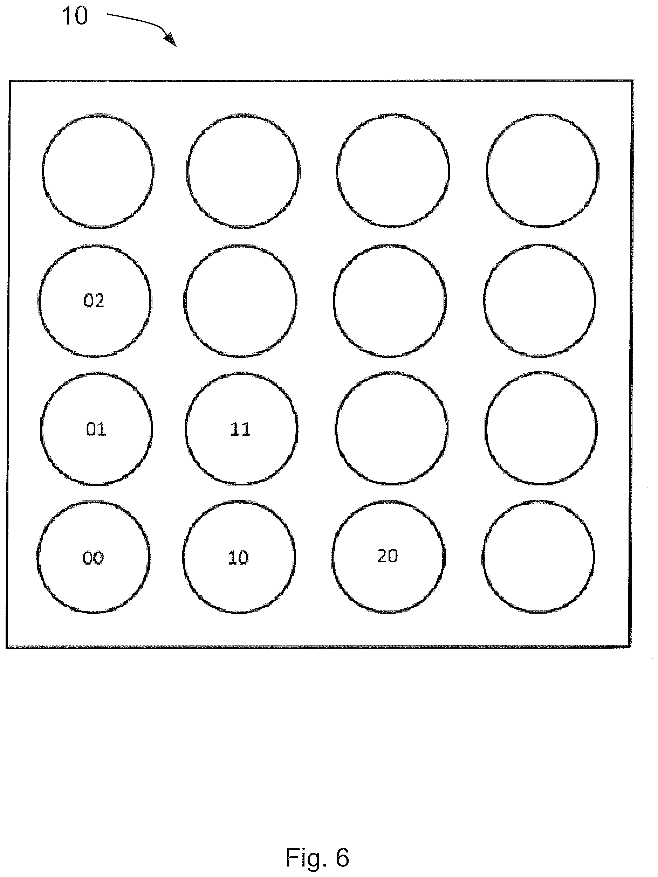

Wie in Figur 6 dargestellt, werden die vorstehenden Verfahrensschritte jeweils mit den vorherig ermittelten Ventilatoren V_{n,m} wiederholt um sämtliche Positionen zu bestimmen.

Aus den Figuren geht auch eindeutig hervor, was unter dem Begriff unmittelbar benachbart zu verstehen ist. Dies ist jeweils ein Ventilator, der gegenüber dem benachbarten Ventilator im Reihenindex oder Spaltenindex um eine Position versetz angeordnet ist, somit gegenüber der Position n,m, sind es die Positionen n-1, m, n, m-1, n-1, m-1, n+1, m+1,

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Verfahren zur Positionsbestimmung von einer Anzahl von Ventilatoren (V_{n,m}) zur Erzeugung eines Luftstroms in einen vorzugsweise geschlossenen Raum, die zu deren Positionsbestimmung einen Drehzahlsensor (3) besitzen, wobei die Ventilatoren (V_{n,m}) in Reihen (R₁, R₂,..., Rₙ) und Spalten (S₁, S₂, ..., Sₘ) angeordnet sind, wobei wenigstens die Position (i, j) eines Ventilators (V_{i,j}) bekannt ist, mit den folgenden Schritten:
a) Antreiben des wenigstens einen Ventilators (V_{i,j}), dessen Position bekannt ist, um dadurch eine Drehung wenigstens der in jeweils einer Reihen- und Spaltenposition daneben angeordneten Ventilatoren (V_{n,m}) zu initiieren;
b) Erfassen der Drehzahl der auf diese Weise durch den erzeugten Luftstrom angetriebenen Ventilatoren (V_{n,m}) mit einem Erfassungs- und Steuergerät und Bestimmen der möglichen Nachbarschafts-Positionen dieser Ventilatoren auf Basis eines iterativen Ausschluss-Algorithmus,
c) wobei die Schritte a) und b) solange für die nach Schritt b) jeweils bestimmten Ventilatoren (V_{n,m}) wiederholt werden bis alle Positionen (n,m) der Ventilatoren bestimmt wurden.

2. Verfahren gemäß Anspruch 1, wobei die Ventilatoren (V_{n,m}) jeweils vor dem Schritt a) mittels des Steuergeräts in den Leerlauf gesetzt werden.

3. Verfahren gemäß Anspruch 1 oder 2, wobei das Antreiben des positionsbekannten Ventilators (V_{i,j}) in Schritt a) mit einem maximalen Ansteuergrad durchgeführt wird und die Position (i, j) des Ventilators (V_{i,j}) auf die bekannte Position (i, j) gesetzt wird.

4. Verfahren gemäß einem der vorherigen Ansprüche, wobei das Messen der Drehzahl in Schritt b) der durch den erzeugten Luftstrom angetriebenen Ventilatoren (V_{n,m}) und das Übertragen der Daten an das Steuergerät mittels der Drehzahlsensoren erfolgt.

5. Verfahren gemäß einem der vorherigen Ansprüche, wobei das Bestimmten derjenigen Positionen (n, m) aller unmittelbar zum Ventilator (V_{i,j}) in einer Reihenposition und/oder Spaltenposition benachbarten, positionsunbekannten Ventilatoren (V_{n,m}) in Schritt b) ausgehend von der Position des antreibenden Ventilators (V_{i,j}) erfolgt.

6. Verfahren gemäß einem der vorherigen Ansprüche, wobei der positionsbekannte Ventilator (V_{i,j}) nach Schritt b) mittels des Steuergeräts in den Leerlauf geschalten wird.

7. Verfahren gemäß einem der vorherigen Ansprüche, wobei das Antreiben eines von wenigstens zwei der in Schritt b) erfassten Ventilatoren (V_{n,m}) mit einem vorbestimmten, vorzugsweise maximalen Ansteuergrad.

8. Verfahren gemäß einem der vorherigen Ansprüche, wobei in Schritt b) die Positionen (n+1, m; n, m+1) der unmittelbar zum in Schritt b) angetrieben Ventilator (V_{n,m}) benachbarten, positionsunbekannten Ventilatoren (V_{n+1,m}; V_{n,m+1}) mit der Position des antreibenden Ventilators (V_{n,m}) markiert werden.

9. Verfahren gemäß Anspruch 8, wobei in Schritt b) nach der Markierung der benachbarten, positionsunbekannten Ventilatoren (V_{n+1,m}; V_{n,m+1}) der angetriebene Ventilator (V_{n,m}) in den Leerlauf geschalten wird und einer der anderen markierten Ventilatoren (V_{n+1,m}; V_{n,m+1}) mit einem maximalen Ansteuergrad angetrieben wird.

10. Verfahren gemäß Anspruch 9, wobei in Schritt b) die Drehzahl der durch den
Ventilator (V_{n+1,m}; V_{n,m+1}) angetriebenen benachbarten, positionsunbekannten Ventilatoren (V_{n+2,m}; V_{n,m+2}) mittels der Drehzahlsensoren bestimmt wird und die Daten an das Steuergerät übertragen werden.

11. Verfahren gemäß Anspruch 10, wobei in Schritt b) die Positionen (n+2, m; n, m+2) der benachbarten, positionsunbekannten Ventilatoren mit der Position (V_{n+2,m}; V_{n,m+2}) des antreibenden Ventilators (V_{n+1,m}; V_{n,m+1}) markiert werden.

12. Verfahren gemäß einem der vorherigen Ansprüche, wobei falls ein Ventilator (V_{n+1,m}; V_{n,m+1}; V_{n+2,m}; V_{n,m+2}) bereits Markiert ist die Position (n+1, m; n, m+1; n+2, m; n, m+2) des Ventilators auf eine eindeutige, bestimmte Position (i, j) gesetzt wird.

13. Verfahren gemäß einem der Ansprüche 8 bis 12, wobei das Antreiben eines der markierten Ventilatoren (V_{n+1,m}; V_{n,m+1}) und so lange durchgeführt wird, bis sämtlich Ventilatoren (V_{n,m}) bestimmt sind.

14. Verfahren zur Positionsbestimmung von einer Anzahl an Ventilatoren (V_{n,m}) zur Erzeugung eines Luftstroms in einen vorzugsweise geschlossenen Raum, die zu deren Positionsbestimmung einen Drehzahlsensor (3) besitzen, wobei die Ventilatoren (V_{n,m}) in Reihen (R₁, R₂,..., Rₙ) und Spalten (S₁, S₂, ..., Sₘ) angeordnet sind, wobei wenigstens die Position (i, j) eines Ventilators (V_{i,j}) bekannt ist, wobei ein Steuergerät, das zur Ansteuerung und Ermittlung der Position der Ventilatoren (V_{n,m}) ausgebildet ist, vorgesehen ist, wobei jeder der Ventilatoren (V_{n,m}) von einem in Reihe (R₁, R₂,..., Rₙ) und Spalte (S₁, S₂, ..., Sₘ) Ventilator (V_{n+1,m}; V_{n,m+1}) indirekt antreibbar ist, mit den folgenden Schritten:
a. Setzen der Ventilatoren (V_{n,m}) in den Leerlauf mittels des Steuergeräts,
b. Antreiben des positionsbekannten Ventilators (Vᵢ,ⱼ) mit einem maximalen Ansteuergrad und Setzen der Position (i, j) des Ventilators (V_{i,j}) auf die bekannte Position (i, j),
c. Messen der Drehzahl der durch den erzeugten Luftstrom angetriebenen Ventilatoren (V_{n,m}) und Übertragen der Daten an das Steuergerät mittels der Drehzahlsensoren,
d. Bestimmten derjenigen Positionen (n, m) aller unmittelbar zum Ventilator (V_{i,j}) in einer Reihenposition und/oder Spaltenposition benachbarten, positionsunbekannten Ventilatoren (V_{n,m}) ausgehend von der Position des antreibenden Ventilators (V_{i,j}),
e. Schalten des positionsbekannten Ventilators (V_{i,j}) in den Leerlauf mittels des Steuergeräts,
f. Antreiben eines von wenigstens zwei der erfassten Ventilatoren (V_{n,m}) mit einem vorbestimmten, vorzugsweise maximalen Ansteuergrad,
g. Markieren der Positionen (n+1, m; n, m+1) der unmittelbar zum in Schritt f) angetriebenen Ventilator (V_{n,m}) benachbarten, positionsunbekannten Ventilatoren (V_{n+1,m}; V_{n,m+1}) mit der Position des antreibenden Ventilators (V_{n,m}),
h. Schalten des angetriebenen Ventilators (V_{n,m}) in den Leerlauf und Antreiben wenigstens des zweiten markierten Ventilatoren (V_{n,m}) mit einem maximalen Ansteuergrad,
i. Bestimmen der Drehzahl der durch den zweiten Ventilator (V_{n,m}) angetriebenen benachbarten, positionsunbekannten Ventilatoren (V_{n+1,m}; V_{n,m+1}) mittels der Drehzahlsensoren und Übertragen der Daten an das Steuergerät,
j. Markieren der Positionen (n+1, m; n, m+1) der unmittelbar zum in Schritt i) angetrieben Ventilator (V_{n,m}) benachbarten, positionsunbekannten Ventilatoren (V_{n+1,m}; V_{n,m+1}) mit der Position des antreibenden Ventilators (V_{n,m}; V_{n,m}),
k. falls ein Ventilator (V_{n+1,m}; V_{n,m+1}) in Schritt g) bzw. j) bereits markiert ist, Bestimmen und Setzen der Position (n, m) des Ventilators (V_{n+1,m}; V_{n,m+1}) auf eine eindeutige, bestimmte Position (n, m),
l. Antreiben eines der in Schritt g) bzw. j) markierten Ventilatoren und wiederholen der Schritte f) bis k), so lange bis sämtliche Ventilatoren (V_{n,m}) bestimmt sind.

15. Verfahren gemäß dem vorherigen Anspruch, wobei die Bestimmung der Position (n, m) des Ventilators (V_{n+1,m}; V_{n,m+1}) in Schritt k) durch einen Vergleich der Indizes n und m der bereits vorhandenen Markierung und der neu entstandenen Markeirung erfolgt, wobei jeweils der höhere Index den Index für die bestimmte Position (n, m) darstellt.

## Claims

1. A method for determining the positions of a plurality of fans (V_{n,m}) for generating an air flow in a preferably closed room, which have a speed sensor (3) for determining their position, wherein the fans (V_{n,m}) are arranged in rows (R₁, R₂,..., Rₙ) and columns (S₁, S₂, ..., Sₘ), wherein at least the position (i, j) of one fan (V_{i,j}) is known, the method comprising the following steps:
a) Driving the at least one fan (V_{i,j}) the position of which is known in order to initiate a rotation of at least those fans (V_{n,m}) which are arranged in an adjacent row or column position;
b) Detecting the speed of the fans (V_{n,m}) driven by the air flow generated in this manner using a detector and controller and determining the potential neighborhood positions of these fans based on an iterative exclusion algorithm,
c) Wherein the steps a) and b) are repeated for the fans (V_{n,m}) respectively determined after step b) until all positions (n,m) of the fans have been determined.

2. The method according to claim 1, wherein the fans (V_{n,m}) are set to idling by means of the controller prior to step a).

3. The method according to claim 1 or 2, wherein the fan (V_{i,j}) with a known position in step a) is driven at a maximum degree of activation and the position (i, j) of the fan (V_{¡,j}) is set to the known position.

4. The method according to any one of the preceding claims, wherein measuring the speed in step b) of the fans (V_{n,m}) driven by the generated air flow and the transmission of the data to the controller is performed by means of the speed sensors.

5. The method according to any one of the preceding claims, wherein the determining of those positions (n, m) of all fans (V_{n,m}) having an unknown position in a row and/or column position immediately adjacent to the fan (V_{¡,j}) is implemented in step b) based on the position of the driving fan (V_{i,j}).

6. The method according to any one of the preceding claims, wherein the fan (V_{¡,j}) with a known position is switched to idling by means of the controller after step b).

7. The method according to any one of the preceding claims, wherein driving of at least two of the fans (V_{n,m}) detected in step b) is performed at a predetermined, preferably maximum degree of activation.

8. The method according to any one of the preceding claims, wherein in Step b) the positions (n+1, m; n, m+1) of unknown fans (V_{n+1,m}; V_{n,m+1}) located immediately adjacent to the fan (V_{n,m}) driven in step b) are marked with the position of the driving fan (V_{n,m}).

9. The method according to claim 8, wherein in Step b), after marking the adjacentfans (V_{n+1,}m; V_{n,m+1}) having an unknown position, the driven fan (V_{n,m}) is switched to idling, and one of the other marked fans (V_{n+1,m}; V_{n,m+1}) is driven at a maximum degree of activation.

10. The method according to claim 9, wherein in Step b), the speed of the adjacent fans (V_{n+2,m}; V_{n,m+2}) having an unknown position, which are driven by the fan (V_{n+1,m}; V_{n,m+1}), is determined by means of speed sensors, and the data is transmitted to the controller.

11. The method according to claim 10, wherein in Step b) the positions (n+2, m; n, m+2) of the adjacent fans having an unknown position are marked with the position (V_{n+2,m}; V_{n,m+2}) of the driving fan (V_{n+1,m}; V_{n,m+1}).

12. The method according to any one of the preceding claims, wherein, if a fan (V_{n+1,m}; V_{n,m+1}; V_{n+2,m}; V_{n,m+2}) is already marked, the position (n+1, m; n, m+1; n+2, m; n, m+2) of the fan is set to a unique specific position (i, j).

13. The method according to any one of claims 8 to 12, wherein driving one of the marked fans (V_{n+1,m}; V_{n,m+1}) is executed until all fans (V_{n,m}) are determined.

14. Method for determining the positions of a number of fans (V_{n,m}) for generating an air flow in a preferably closed room, which fans have a speed sensor (3) for their positioning, wherein the fans (V_{n,m}) are arranged in rows (R₁, R₂,..., Rₙ) and columns (S₁, S₂, ..., Sₘ), wherein at least the position (i, j) of a fan (V_{i,j}) is known, wherein a controller is provided which is configured for activation and determination of the positions of the fans (V_{n,m}), wherein each of the fans (V_{n,m}) can be indirectly driven by a fan (V_{n+1,m}; V_{n,m+1}) in row (R₁, R₂,..., Rₙ) and column (S₁, S₂, ..., Sₘ), the method comprising the following steps:
a. Setting the fans (V_{n,m}) to idling by means of the controller,
b. Driving the fan (V_{i,j}) with a known position at a maximum degree of activation and setting the position (i, j) of the fan (V_{¡,j}) to the known position (i,j),
c. Measuring the speed of the fans (V_{n,m}) driven by the air flow generated and transmitting the data to the controller by means of the speed sensors,
d. Determining those positions (n, m) of all fans (V_{n,m}) having an unknown position immediately adjacent in a row position and/or column position to the fan (V_{¡,j}) based on the position of the driving fan (V_{i,j}),
e. Setting the fan (V_{¡,j}) with the known position to idling by means of the controller,
f. Driving one of at least two of the detected fans (V_{n,m}) at a predetermined, preferably maximum, degree of activation,
g. Marking the positions (n+1, m; n, m+1) of fans (V_{n+1,m}; V_{n,m+1}) having unknown positions located immediately adjacent to the fan (V_{n,m}) driven in step f) with the position of the driving fan (V_{n,m}),
h. Switching the driven fan (V_{n,m}) to idling and driving at least the second marked fan (V_{n,m}) at a maximum degree of activation,
i. Determining the speed of the adjacent fans (V_{n+1,m}; V_{n,m+1}) having unknown positions, being driven by the second fan (V_{n,m}) by means of the speed sensors and transmitting the data to the controller,
j. Marking the positions (n+1, m; n, m+1) of fans (V_{n+1,m}; V_{n,m+1}) having unknown positions located immediately adjacent to the fan (V_{n,m}) driven in step i) with the position of the driving fan (V_{n,m}; V_{n,m}),
k. if a fan (V_{n+1,m}; V_{n,m+1}) has already been marked in step g) or step j), respectively, determining and setting position (n, m) of the fan (V_{n+1,m}; V_{n,m+1}) to a unique, specific position (n, m),
l. Driving one of the fans marked in step g) or j), respectively, and repeating the steps f) to k) until all fans (V_{n,m}) are determined.

15. The method according to the preceding claim, wherein the determining of the position (n, m) of the fan (V_{n+1,m}; V_{n,m+1}) in step k) is determined by comparing the indices n and m of the already existing marking and the newly created marking, wherein the respective higher index represents the index for the determined position (n, m).

## Revendications

1. Procédé permettant de déterminer des positions d'un nombre de ventilateurs (V_{n,m}) destinés à produire un flux d'air dans un espace de préférence fermé et qui possèdent un capteur de vitesse de rotation (3) pour déterminer leur positions, les ventilateurs (V_{n,m}) étant disposés en rangées (R₁, R₂, ..., Rₙ) et colonnes (S₁, S₂, ..., Sₘ), au moins la position (i, j) d'un ventilateur (V_{i,j}) étant connue, comprenant les étapes consistant à :
a) entraîner ledit au moins un ventilateur (V_{i,j}) dont la position est connue afin de lancer de ce fait une rotation au moins des ventilateurs (V_{n,m}) disposés à côté de celui-ci dans respectivement une position de rangée et de colonne ;
b) détecter la vitesse de rotation des ventilateurs (V_{n,m}) ainsi entraînés par le flux d'air produit, à l'aide d'un appareil de détection et de commande, et déterminer les positions voisines possibles de ces ventilateurs sur la base d'un algorithme d'exclusion itératif,
c) les étapes a) et b) étant répétées pour les ventilateurs (V_{n,m}) respectivement déterminées à l'issue de l'étape b) jusqu'à ce que toutes les positions (n, m) des ventilateurs aient été déterminées.

2. Procédé selon la revendication 1, dans lequel les ventilateurs (V_{n,m}) sont mis en mode roue libre au moyen de l'appareil de commande respectivement avant l'étape a).

3. Procédé selon la revendication 1 ou 2, dans lequel l'entraînement du ventilateur (V_{i,j}) de position connue est effectué à l'étape a) avec un degré de pilotage maximal, et la position (i, j) du ventilateur (V_{i,j}) est réglée sur la position connue (i, j).

4. Procédé selon l'une quelconque des revendications précédentes, dans lequel la mesure de la vitesse de rotation à l'étape b) des ventilateurs (V_{n,m}) entraînés par le flux d'air produit et la transmission des données à l'appareil de commande sont effectuées au moyen des capteurs de vitesse de rotation.

5. Procédé selon l'une quelconque des revendications précédentes, dans lequel la détermination des positions (n, m) de tous les ventilateurs (V_{n,m}) de position inconnue, directement voisins du ventilateur (V_{i,j}) dans une position de rangée et/ou une position de colonne, est effectuée à l'étape b) en partant de la position du ventilateur d'entraînement (V_{i,j}).

6. Procédé selon l'une quelconque des revendications précédentes, dans lequel le ventilateur (V_{i,j}) de position connue à l'issue de l'étape b) est commuté sur le mode roue libre au moyen de l'appareil de commande.

7. Procédé selon l'une quelconque des revendications précédentes, dans lequel l'entraînement d'un parmi au moins deux des ventilateurs (V_{n,m}) détectés à l'étape b) est effectué avec un degré de pilotage prédéterminé, de préférence maximal.

8. Procédé selon l'une quelconque des revendications précédentes, dans lequel à l'étape b), les positions (n+1, m ; n, m+1) des ventilateurs (V_{n+1,m} ; V_{n,m+1}) de position inconnue, directement voisins du ventilateur (V_{n,m}) entraîné à l'étape b), sont marquées avec la position du ventilateur d'entraînement (V_{n,m}).

9. Procédé selon la revendication 8, dans lequel à l'étape b), après le marquage des ventilateurs voisins (V_{n+1,m}; V_{n,m+1}) de position inconnue, le ventilateur entraîné (V_{n,m}) est commuté sur le mode roue libre, et l'un des autres ventilateurs marqués (V_{n+1,m} ; V_{n,m+1}) est entraîné avec un degré de pilotage maximal.

10. Procédé selon la revendication 9, dans lequel à l'étape b), la vitesse de rotation des ventilateurs voisins (V_{n+1,m} ; V_{n,m+1}) de position inconnue, entraînés par le ventilateur (V_{n+1,m} ; V_{n,m+1}), est déterminée au moyen des capteurs de vitesse de rotation, et les données sont transmises à l'appareil de commande.

11. Procédé selon la revendication 10, dans lequel à l'étape b), les positions (n+2, m; n, m+2) des ventilateurs voisins (V_{n+1,m}; V_{n,m+1}) de position inconnue sont marquées avec la position (V_{n+2,m} ; V_{n,m+2}) du ventilateur d'entraînement (V_{n+1,m} ; V_{n,m+1}).

12. Procédé selon l'une quelconque des revendications précédentes, dans lequel, si un ventilateur (V_{n+1,m} ; V_{n,m+1} ; V_{n+2,m} ; V_{n,m+2}) est déjà marqué, la position (n+1, m ; n, m+1 ; n+2, m ; n, m+2) du ventilateur est réglée sur une position déterminée univoque (i, j).

13. Procédé selon l'une quelconque des revendications 8 à 12, dans lequel l'entraînement d'un des ventilateurs marqués (V_{n+1,m} ; V_{n,m+1}) est effectué jusqu'à ce que tous les ventilateurs (V_{n,m}) aient été déterminés.

14. Procédé permettant de déterminer les positions d'un nombre de ventilateurs (V_{n,m}) destinés à produire un flux d'air dans un espace de préférence fermé et qui possèdent un capteur de vitesse de rotation (3) pour déterminer leurs positions, les ventilateurs (V_{n,m}) étant disposés en rangées (R₁, R₂, ..., Rₙ) et colonnes (S₁, S₂, ..., Sₘ), au moins la position (i, j) d'un ventilateur (V_{i,j}) étant connue, un appareil de commande qui est réalisé pour piloter et établir la position des ventilateurs (V_{n,m}) étant prévu, chacun des ventilateurs (V_{n,m}) pouvant être entraîné indirectement par un ventilateur (V_{n+1,m} ; V_{n,m+1}) disposé en rangée (R_{1,} R₂, ..., Rₙ) et colonne (S₁, S₂, ... Sₘ), comprenant les étapes suivantes consistant à :
a. régler les ventilateurs (V_{n,m}) en mode roue libre au moyen de l'appareil de commande,
b. entraîner le ventilateur (V_{1,g}) de position connue avec un degré de pilotage maximal, et régler la position (i, j) du ventilateur (V_{i,j}) sur la position connue (i,j),
c. mesurer la vitesse de rotation des ventilateurs (V_{n,m}) entraînés par le flux d'air produit, et transmettre les données à l'appareil de commande au moyen des capteurs de vitesse de rotation,
d. déterminer les positions (n, m) de tous les ventilateurs (V_{n,m}) de position inconnue, directement voisins du ventilateur (V_{i,j}) dans une position de rangée et/ou une position de colonne en partant de la position du ventilateur d'entraînement (V_{i,j}),
e. commuter le ventilateur (V_{i,j}) de position connue sur le mode roue libre au moyen de l'appareil de commande,
f. entraîner l'un parmi au moins deux des ventilateurs (V_{n,m}) détectés avec un degré de pilotage prédéterminé, de préférence maximal,
g. marquer les positions (n+1, m ; n, m+1) des ventilateurs (V_{n+i,m} ; V_{n,m+i}) de position inconnue, directement voisins du ventilateur entraîné à l'étape f), avec la position du ventilateur d'entraînement (V_{n,m}),
h. commuter le ventilateur entraîné (V_{n,m}) sur le mode roue libre, et entraîner au moins le deuxième ventilateur marqué (V_{n,m}) avec un degré de pilotage maximal,
i. déterminer la vitesse de rotation des ventilateurs voisins (V_{n+i,m} ; V_{n,m+i}) de position inconnue, entraînés par le deuxième ventilateur (V_{n,m}), au moyen des capteurs de vitesse de rotation, et transmettre les données à l'appareil de commande,
j. marquer les positions (n+1, m ; n, m+1) des ventilateurs (V_{n+i,m} ; V_{n,m+i}) de position inconnue, directement voisins du ventilateur (V_{n,m}) entraîné à l'étape i), avec la position du ventilateur d'entraînement (V_{n,m} ; V_{n,m}),
k. si un ventilateur (V_{n+1,m} ; V_{n,m+1}) est déjà marqué à l'étape g) ou j), déterminer et régler la position (n, m) du ventilateur (V_{n+1,m} ; V_{n,m+1}) sur une position déterminée univoque (n, m),
l. entraîner l'un des ventilateurs marqués à l'étape g) ou j), et répéter les étapes f) à k) jusqu'à ce que tous les ventilateurs (V_{n,m}) aient été déterminés.

15. Procédé selon la revendication précédente, dans lequel la détermination de la position (n, m) du ventilateur (V_{n+i,m} ; V_{n,m+1}) à l'étape k) est effectuée par une comparaison des indices n et m du marquage déjà existant et du marquage nouvellement créé, dans lequel respectivement l'indice supérieur représente l'indice pour la position déterminée (n, m).
